(19)

Europäisches
Patentamt
European
Patent Office
Office européen
des brevets

(11) **EP 4 006 118 A1**

(12) **EUROPEAN PATENT APPLICATION**
published in accordance with Art. 153(4) EPC

(43) Date of publication:
**01.06.2022 Bulletin 2022/22**

(21) Application number: **20843403.5**

(22) Date of filing: **03.07.2020**

(51) International Patent Classification (IPC):
*C09J 175/04* (2006.01)        *C09J 11/00* (2006.01)
*C08G 18/10* (2006.01)        *C08K 5/12* (2006.01)
*C08K 5/00* (2006.01)

(52) Cooperative Patent Classification (CPC):
**C08G 18/10; C08K 5/00; C08K 5/12; C09J 7/40;
C09J 11/00; C09J 175/04**

(86) International application number:
**PCT/KR2020/008708**

(87) International publication number:
**WO 2021/015443 (28.01.2021 Gazette 2021/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.07.2019 KR 20190088585**

(71) Applicant: **KCC Corporation
Seoul 06608 (KR)**

(72) Inventors:
• **LEE, Jeong Hyun**
  **Ulsan 44262 (KR)**
• **LEE, Jae Young**
  **Ulsan 44459 (KR)**
• **KWON, Jin Wook**
  **Ulsan 44261 (KR)**
• **KIM, Yu Seok**
  **Ulsan 44262 (KR)**

(74) Representative: **Newcombe, Christopher David
Venner Shipley LLP
200 Aldersgate
London EC1A 4HD (GB)**

(54) **URETHANE ADHESIVE COMPOSITION**

(57)    The present invention relates to a urethane adhesive composition comprising a first urethane-based prepolymer, a second urethane-based prepolymer, a first adhesion promoter and a second adhesion promoter.

EP 4 006 118 A1

**Description**

[Technical Field]

The present invention relates to a urethane adhesive composition for a vehicle that does not require primer treatment.

[Background Art]

When bonding glass to the painted surface of a vehicle body, in order to prevent the glass from being pushed or detached from the painted surface due to insufficient adhesive force between the painted surface and the glass, a primer is generally first applied to the painted surface and/or the glass surface, and a moisture-curable urethane adhesive is applied on the primer. The moisture-curable urethane adhesive contains a urethane resin, which is a reaction product of isocyanate and polyol, as a resin component, and carbon black, calcium carbonate, etc. as a pigment component and typically contains a plasticizer such as diisononyl phthalate (DINP). In addition, the moisture-curable urethane adhesive as described above contains a morpholine amine catalyst with moisture adsorbability to enable moisture-curing, or contains, if necessary, a tertiary amine, tin catalyst, bismuth, Zn catalyst, etc. together, which is used as a general urethane catalyst.

However, the conventional moisture-curable urethane adhesive generally has a low or medium shear modulus, and thus has a limitation that it does not prevent distortion of the vehicle at the time of collision of the vehicle or does not prevent deflection phenomenon when cornering during high-speed driving.

As an alternative to this, Korean Laid-open Patent Publication No. 2019-0003569 (Patent Document 1) discloses a high modulus urethane adhesive composition comprising a urethane prepolymer resin, a reactive silane, a polyisocyanate having a functionality greater than 2, a catalyst, and a carbon black filler. However, Patent Document 1 has a limit in increasing the modulus, and has a problem that the shear strength is lowered when the modulus is increased.

Accordingly, there is a need for research and development on urethane adhesive composition, which is capable of moisture-curing and has excellent adhesive properties on the painted surface and/or the glass surface of the vehicle body, and thus does not need a primer treatment and can produce a hardened material having a high shear modulus.

[Disclosure]

[Technical Problem]

Therefore, the present invention is to provide a urethane adhesive composition, which has excellent adhesive properties for painting and/or glass of the vehicle body and thus can omit the process of coating the primer on the glass surface, has excellent economic feasibility due to the omission of the primer coating process as described above, and can produce a hardened material having a high shear modulus.

[Technical Solution]

The present invention provides a urethane adhesive composition, which is a composition comprising a first urethane-based prepolymer, a second urethane-based prepolymer, a first adhesion promoter, and a second adhesion promoter,

> wherein the first urethane-based prepolymer is prepared from a first resin composition comprising a first polyol, an isocyanate compound, and a phthalate-based plasticizer,
> the second urethane-based prepolymer is prepared from a second resin composition comprising a second polyol, an isocyanate compound, and a non-phthalate-based plasticizer,
> the first adhesion promoter is a polyisocyanate,
> the second adhesion promoter is a silane modified resin, and
> the composition comprises 50 to 150 parts by weight of the second urethane-based prepolymer, based on 100 parts by weight of the first urethane-based prepolymer.

[Advantageous Effects]

The urethane adhesive composition according to the present invention has an excellent adhesive property for painting and/or glass of a vehicle body, so that the process of coating the primer on the surface of vehicle body and/or glass can be omitted, and has excellent economic feasibility due to the omission of the primer coating process as described above. In addition, the urethane adhesive can be hardened in a variety of temperature ranges, has an excellent workability due to an appropriate pot life, and can produce a hardened material having high shear modulus.

[Best Mode]

Hereinafter, the present invention will be described in detail.

In the present invention, 'weight average molecular weight' of a resin can be measured by a method known in the art, and can represent the value measured by, for example, a method such as a gel permeation chromatograph (GPC). In addition, 'the content of unreacted NCO(NCO%)' can be measured by a method known in the art, and can represent the value measured by, for example, a method such as titration.

The urethane adhesive composition according to the present invention includes a first urethane-based prepolymer, a second urethane-based prepolymer, a first adhesion promoter, and a second adhesion promoter.

First urethane-based prepolymer

A first urethane-based prepolymer is a main material of a urethane adhesive composition, and serves to control mechanical properties of hardened material to be prepared and impart flexibility thereto.

The first urethane-based prepolymer has a weight average molecular weight (Mw) of 3,000 to 15,000 g/mol. Specifically, the first urethane-based prepolymer may have a weight average molecular weight of 6,000 to 14,000 g/mol or 8,000 to 13,000 g/mol. If the first urethane-based prepolymer has a weight average molecular weight within the ranges, shear strength and mechanical properties of the prepared coating film are excellent.

In addition, the first urethane-based prepolymer may have a viscosity of 5,000 to 12,000 cps at 20°C, and have the content of unreacted NCO(NCO%) of 1.6 to 1.85 wt.% relative to the total weight of the prepolymer. Specifically, the first urethane-based prepolymer may have a viscosity of 7,000 to 9,500 cps or 8,000 to 9,000 cps at 20°C, and have the content of unreacted NCO of 1.65 to 1.8 wt.% or 1.70 to 1.75 wt.% relative to the total weight of the prepolymer. If the first urethane-based prepolymer has the viscosity at 20°C within the ranges, the workability of a composition is excellent, and if the NCO% is within the ranges, the shear strength of the prepared coating film is improved.

The first urethane-based prepolymer may be prepared from a first resin composition including a first polyol, an isocyanate compound, and a phthalate-based plasticizer. In this case, the first polyol and an isocyanate compound react with each other to form a urethane bond, and serve to impart mechanical properties to the first urethane-based prepolymer. In addition, the phthalate-based plasticizer serves to adjust the viscosity of the first resin composition and impart flexibility to the first urethane-based prepolymer.

The first polyol may include at least one selected from the group consisting of polyester polyol, polyether polyol, and polyalkylene polyol. Specifically, the first polyol may be polyalkylene polyol, or a mixture of polyalkylene triol and polyalkylene glycol. In this case, the alkylene may be an alkylene having 2 to 6 carbon atoms or an alkylene having 2 to 4 carbon atoms.

In addition, the first polyol may have a weight average molecular weight(Mw) of 1,000 to 8,000 g/mol. Specifically, the first polyol may include a polyalkylene glycol having a weight average molecular weight of 1,600 to 2,500 g/mol or 1,800 to 2,200 g/mol and a polyalkylene triol having a weight average molecular weight of 4,100 to 7,000 g/mol or 4,500 to 5,500 g/mol. Specifically, the first polyol may include a polyalkylene glycol having a weight average molecular weight of 1,900 to 2,100 g/mol and a polyalkylene triol having a weight average molecular weight of 4,800 to 5,200 g/mol.

The isocyanate compound may include two or more isocyanate groups. Specifically, the isocyanate compound may include at least one selected from the group consisting of methylene diphenyl diisocyanate, isophoronediisocyanate, bis(4-isocyanatecyclohexyl)methane, trimethylenediisocyanate, tetramethylenediisocyanate, pentamethylenediisocyanate, hexamethylenediisocyanate, propylenediisocyanate, ethylene diisocyanate, 2,3-dimethylethylene diisocyanate, 1-methyl trimethylenediisocyanate, 1,3-cyclopentene diisocyanate, 1,4-cyclopentene diisocyanate, 1,2-cyclopentene diisocyanate, 1,3-phenylene diisocyanate, 1,4-phenylene diisocyanate, 2,4-toluene diisocyanate, 2,6-toluene diisocyanate, 5-isocyanato-1-(isocyanatomethyl)-1,3,3-trimethyl-cyclohexane, triphenylmethane triisocyanate, tris(isocyanatephenyl) thiophosphate, and 1,6,10-undecane triisocyanate.

The phthalate-based plasticizer may be a dialkyl phthalate. Specifically, the phthalate-based plasticizer may include at least one selected from the group consisting of dioctylphthalate, diisodecylphthalate, dibutylphthalate, diisononylphthalate, diisodecyl phthalate, and diisononyl phthalate.

The first urethane-based prepolymer may be prepared from a first resin composition including a first polyol, an isocyanate compound, and a phthalate-based plasticizer. The first polyol may be included in an amount of 5 to 30 parts by weight or 8 to 29 parts by weight, the isocyanate compound may be included in an amount of 0.1 to 10 parts by weight or 0.1 to 7 parts by weight, and the phthalate-based plasticizer may be included in an amount of 1 to 15 parts by weight or 1 to 12 parts by weight. If the content of first polyol, an isocyanate compound, and a phthalate-based plasticizer in the first resin composition is within the content ranges, mechanical properties of the prepared coating film are improved.

In addition, the first urethane-based prepolymer may be included in a composition in an amount of 20 to 50 parts by weight, 25 to 45 parts by weight, or 25 to 40 parts by weight, based on 100 parts by weight of a urethane adhesive composition.

Second urethane-based prepolymer

A second urethane-based prepolymer is also a main material of a urethane adhesive composition, and, like the first urethane-based prepolymer, serves to control mechanical properties such as shear strength, tensile strength, tear strength, hardness and the like of a hardened material to be prepared, and impart flexibility to the hardened material.

The second urethane-based prepolymer has a weight average molecular weight (Mw) of 17,000 to 35,000 g/mol. Specifically, the second urethane-based prepolymer may have a weight average molecular weight of 17,000 to 30,000 g/mol or 18,000 to 25,000 g/mol. If the second urethane-based prepolymer has a weight average molecular weight within the ranges, the workability of a composition and mechanical properties of the prepared coating film are improved.

In addition, the second urethane-based prepolymer has a viscosity of 10,000 to 15,000 cps at 20°C, and has the content of unreacted NCO(NCO%) of 2.2 to 2.7 wt.% relative to the total weight of the prepolymer. Specifically, the second urethane-based prepolymer has a viscosity of 10,500 to 14,000 cps or 11,000 to 13,000 cps at 20°C, and has the content of unreacted NCO of 2.25 to 2.65 wt.% or 2.3 to 2.6 wt.% relative to the total weight of the prepolymer. If the second urethane-based prepolymer has a viscosity within the ranges at 20°C, the shear strength and shear modulus of the prepared coating film are improved, and if the NCO% is within the ranges, the shear strength and shear modulus of the prepared coating film are improved.

The second urethane-based prepolymer may be prepared from a second resin composition including a second polyol, an isocyanate compound, and a non-phthalate(phthalate-free)-based plasticizer.

In this case, the second polyol and an isocyanate compound react to each other to form a urethane bond, and serve to impart mechanical properties to the second urethane-based prepolymer. In addition, the non-phthalate-based plasticizer serves to adjust the viscosity of a second resin composition and impart flexibility to a second urethane-based prepolymer. In particular, if the non-phthalate-based plasticizer is used as a plasticizer, the workability and the sealer discharging property of a composition are improved.

In addition, specific examples of the second polyol are the same as those described in the first urethane-based prepolymer. Furthermore, the second polyol may have a weight average molecular weight (Mw) of 500 to 8,000 g/mol or 800 to 5,000 g/mol. Specifically, the second polyol may include a polyalkylene triol having a weight average molecular weight of 2,100 to 4,000 g/mol or 2,500 to 3,500 g/mol, a polyalkylene triol having a weight average molecular weight of 500 to 1,800 g/mol or 800 to 1,500 g/mol, and a polyalkylene glycol having a weight average molecular weight of 500 to 1,800 g/mol or 800 to 1,500 g/mol.

In addition, the isocyanate compound is the same as those described in the first urethane-based prepolymer.

The non-phthalate-based plasticizer may be at least one selected from the group consisting of alcohol-based plasticizer, ester-based plasticizer, carboxylate-based plasticizer, aliphatic-based plasticizer, and benzoate-based plasticizer. In this case, the non-phthalate-based alcohol-based plasticizer may include, for example, an alcohol compound having 5 to 20 carbon atoms, or isomalt, maltitol, sorbitol, xylitol, erythritol, adonitol, dulcitol, pentaerythritol, or mannitol.

In addition, the non-phthalate-based ester plasticizer may include, for example, phosphoric acid ester plasticizer, polyester plasticizer, tetrabromophthalic acid bis ester, alkylaryl phosphate ester, and the like. In addition, the non-phthalate-based carboxylate plasticizer may include, for example, dinonylcyclohexane dicarboxylate, bis(2-ethylhexyl)cyclohexane dicarboxylate, trioctyl trimellitate, and the like. Furthermore, a non-phthalate-based aliphatic plasticizer may include, for example, dioctyl adipate, acetyl tributyl citrate, dioctylsebacate, and the like. In addition, a non-phthalate-based benzoate plasticizer may include, for example, benzoate ester plasticizers such as Benzoflex manufactured by Eastman company.

The second urethane-based prepolymer may be prepared from a second resin composition including a second polyol, an isocyanate compound, and a non-phthalate-based plasticizer as described above. Specifically, the second polyol may be included in the second resin composition in an amount of 0.1 to 30 parts by weight or 0.3 to 27 parts by weight, an isocyanate compound may be included in an amount of 0.1 to 10 parts by weight or 0.1 to 7 parts by weight, and a non-phthalate-based plasticizer may be included in an amount of 1 to 15 parts by weight or 3 to 13 parts by weight. If the content of a second polyol and an isocyanate compound in the second resin composition is within the ranges, the shear strength and shear modulus of the prepared coating film are improved, and if the content of a non-phthalate-based plasticizer is within the ranges, the workability of a composition and mechanical properties of the prepared coating film are improved.

The second urethane-based prepolymer may be included in a composition in an amount of 50 to 150 parts by weight, based on 100 parts by weight of a first urethane-based prepolymer. Specifically, the second urethane-based prepolymer may be included in a composition in an amount of 80 to 130 parts by weight or 90 to 120 parts by weight, based on 100 parts by weight of a first urethane-based prepolymer. If the content of a second urethane-based prepolymer is within the ranges, there is an effect of improving the mechanical properties of the prepared coating film.

First adhesion promoter

A first adhesion promoter serves to improve the adhesive property of the urethane adhesive composition.

The first adhesion promoter may be a polyisocyanate, and specifically, may be a compound including two or more, or three or more isocyanate groups. Specifically, the first adhesion promoter may be a urea-based compound including two or more, or three or more isocyanate groups.

In this case, the first adhesion promoter may have the weight average molecular weight (Mw) of 100 to 1,000 g/mol, the content of unreacted NCO(NCO%) of 15 to 30 wt.% relative to the total weight, and the viscosity of 1,000 to 3,000 cps at 25°C. Specifically, the first adhesion promoter may have a weight average molecular weight of 300 to 600 g/mol or 400 to 550 g/mol, the content of unreacted NCO of 20 to 28 wt.% or 22 to 25 wt.% relative to the total weight, and the viscosity of 1,000 to 2,500 cps or 1,500 to 2,000 cps at 25°C.

If the first adhesion promoter has a weight average molecular weight within the ranges, the adhesive force and shear modulus of a prepared coating film are improved, and if it has NCO% within the ranges, the adhesive force is excellent, and if the viscosity at 25°C is within the ranges, the workability and discharging property are excellent.

In addition, the first adhesion promoter may be included in a composition in an amount of 0.001 to 5 parts by weight, based on 100 parts by weight of a first urethane-based prepolymer. Specifically, the first adhesion promoter may be included in a composition in an amount of 0.01 to 5 parts by weight or 1 to 5 parts by weight, based on 100 parts by weight of a first urethane-based prepolymer. If the content of a first adhesion promoter is within the ranges, the adhesive force and shear modulus of a prepared coating film are improved.

Second adhesion promoter

A second adhesion promoter also serves to improve the adhesive property of the urethane adhesive composition together with the first adhesion promoter.

The second adhesion promoter may be a silane modified resin, and specifically, a silane-modified urethane resin. Specifically, the second adhesion promoter may be a silane-modified urethane resin having the content of unreacted NCO(NCO%) of 9.0 to 11 wt.% or 9.5 to 10.5 wt.%, based on the total weight. If a second adhesion promoter has NCO% within the ranges, the adhesive force between the prepared coating film and the resin is improved.

In addition, the second adhesion promoter may have a viscosity of 5,000 to 15,000 cps at 20°C and a weight average molecular weight(Mw) of 500 to 2,000 g/mol. Specifically, the second adhesion promoter may have a viscosity of 6,000 to 10,000 cps or 7,000 to 9,000 cps at 20°C and a weight average molecular weight of 700 to 1,500 g/mol or 700 to 1,000 g/mol. If the second adhesion promoter has a viscosity within the ranges at 20°C, the adhesive force of a prepared coating film is improved, and if it has a weight average molecular weight within the ranges, the adhesive force of a prepared coating film is improved.

The second adhesion promoter may be prepared from a third resin composition including a third polyol, an isocyanate compound, a silane compound, and a plasticizer. Specifically, the third polyol may be included in the third resin composition in an amount of 5 to 20 parts by weight or 8 to 15 parts by weight, an isocyanate compound may be included in an amount of 50 to 70 parts by weight or 53 to 62 parts by weight content, a silane compound may be included in an amount of 1 to 20 parts by weight or 5 to 10 parts by weight, and a plasticizer may be included in an amount of 10 to 30 parts by weight or 18 to 28 parts by weight.

In this case, the third polyol and an isocyanate compound act to each other to form a urethane bond, and serve to impart mechanical properties to the second adhesion promoter. In addition, the plasticizer serves to adjust the viscosity of a third resin composition, and impart the flexibility to a second adhesion promoter. In addition, the silane compound serves to modify a urethane resin generated by the reaction of a third polyol and an isocyanate compound to improve the adhesive property of a hardened material prepared therefrom.

In addition, specific examples of the third polyol are the same as those described in the first urethane-based prepolymer. The third polyol may have a weight average molecular weight (Mw) of 100 to 800 g/mol or 200 to 700 g/mol. Specifically, the third polyol may include a polyalkylene glycol having a weight average molecular weight of 200 to 600 g/mol or 300 to 500 g/mol.

The isocyanate compound may be a polyisocyanate including two or more, or three or more isocyanate groups. In addition, the polyisocyanate is the same as those described in the first adhesion promoter.

The silane compound may be, for example, a phenyl amino silane compound. Specifically, the silane compound may be a phenyl aminoalkyl alkoxy silane compound. In this case, the aminoalkyl is an aminoalkyl having 1 to 8 carbon atoms or 1 to 5 carbon atoms, and the alkoxy may be an alkoxy group having 1 to 5 carbon atoms or 1 to 3 carbon atoms. In addition, if a phenyl amino silane compound is used as a silane compound, the adhesive property and storage property of a prepared coating film are improved.

The plasticizer may be a phthalate-based plasticizer, and the phthalate-based plasticizer is the same as those described in the first urethane-based prepolymer.

The second adhesion promoter may be included in a composition in an amount of 1 to 20 parts by weight, based on 100 parts by weight of a first urethane-based prepolymer. Specifically, the second adhesion promoter may be included in a composition in an amount of 5 to 15 parts by weight or 8 to 13 parts by weight, based on 100 parts by weight of a first urethane-based prepolymer. If a second adhesion promoter has the content within the ranges, the adhesive property of a prepared coating film is improved.

Additive

The urethane adhesive composition may further include one or more additives selected from the group consisting of a plasticizer, a pigment, and a catalyst. In addition, an additive that may be typically added to an adhesive composition other than the additives described above may be further included.

In this case, the additive may be included in a composition in an amount of 120 to 190 parts by weight, based on 100 parts by weight of a first urethane-based prepolymer. Specifically, the additive may be included in a composition in an amount of 130 to 180 parts by weight or 145 to 165 parts by weight, based on 100 parts by weight of a first urethane-based prepolymer.

A plasticizer serves to adjust the viscosity of the urethane adhesive composition, and impart the flexibility to a hardened material prepared therefrom. In this case, the plasticizer may be a non-phthalate(phthalate-free)-based plasticizer. In addition, the non-phthalate-based plasticizer is the same as those described in the second urethane-based prepolymer. In particular, if a non-phthalate-based plasticizer is used as a plasticizer, the workability of a composition and mechanical properties of a prepared coating film are improved.

The plasticizer may be included in a composition in an amount of 10 to 70 parts by weight or 30 to 50 parts by weight, based on 100 parts by weight of a first urethane-based prepolymer.

A pigment serves to impart a color to the urethane adhesive composition and increase mechanical properties such as hardness of the hardened material prepared from the composition.

In this case, the pigment may include at least one selected from the group consisting of graphite, carbon black, iron oxide, antimony-tin oxide, mica, carbon nanotube, carbon fiber, barium sulfate, barytes, aluminum silicate, kaolin, kaolinite, magnesium silicate, talc, chlorite, tremolite, silica, quartz, bauxite, dolomite, feldspar, nepheline syenite, calcium silicate, wollastonite, zinc oxide, zinc phosphate, bismuth vanadate, zeolite, and pyrophyllite. Specifically, the pigment may include a first pigment including carbon black and a second pigment including kaolin. Furthermore, the pigment may be included in a composition in an amount of 60 to 150 parts by weight or 100 to 140 parts by weight, based on 100 parts by weight of a first urethane-based prepolymer.

The first pigment serves to improve durability by increasing mechanical properties of a hardened material prepared from the adhesive composition, and the second pigment serves to increase the hardness of a hardened material prepared from the adhesive composition.

In addition, the first pigment may include carbon black having an oil absorption of 100 $cm^3/100g$ or more. Specifically, the first pigment may be carbon black having an oil absorption of 110 to 130 $cm^3/100g$. If the oil absorption of a first pigment is within the ranges, the shear strength and shear modulus of a prepared coating film are improved. In this case, the oil absorption is n-dibutylphthalate (DBP) oil absorption, and may be measured by a method well known in the art, for example, by a method described in ASTM D 2414.

The second pigment may be a calcined kaolin.

A catalyst promotes a hardening reaction of the adhesive composition to serve to control the hardening property and low-temperature adhesive property of a hardened material prepared therefrom. In this case, the catalyst may include at least one selected from the group consisting of organic catalysts such as an organic amine compound; and a metal catalyst such as a tin compound. Specifically, the catalyst may include an organic amine compound and a tin compound. More specifically, the catalyst may include an organic amine compound, a tin dilaurate-based compound, and a tin mercaptide-based compound.

In addition, the catalyst may be included in a composition in an amount of 0.01 to 1 part by weight or 0.1 to 0.7 parts by weight, based on 100 parts by weight of a first urethane-based prepolymer.

The organic catalyst serves to control the internal hardening property of a prepared hardened material, and the metal catalyst serves to control the external and low temperature hardening property and the low temperature adhesive property of a prepared hardened material.

In this case, the amine compound may be, for example, 2,2'-dimorpholinodiethylether, bis-(2-dimethylaminoethyl)ether, triethylenediamine, pentamethyldiethylenetriamine, N,N-dimethylcyclohexylamine, 1,4-diazabicyclo[2.2.2]octane, 1,8-diazabicyclo[5.4.0]undec-7-ene, 1,5-diazabicyclo[4.3.0]non-5-ene, and the like. In addition, the tin compound may be dibutyltin dilaurate, dimethyltin dilaurate, dioctyltin dilaurate, dibutyltin mercaptide, dimethyltin mercaptide, dibutyltin diacetate, tin octylate, tin naphthenate, dibutyltin oxide, and the like.

The urethane adhesive composition according to the present invention as described above has excellent adhesive property to glass, and thus a process of painting the primer on the glass surface may be omitted, and has excellent economic efficiency due to the omission of the primer painting process as described above. In addition, the urethane adhesive may be hardened in a variety of temperature ranges, has excellent workability due to an appropriate pot life, and can prepare a hardened material having high shear modulus.

Hereinafter, the present invention will be described in more detail through examples. However, these examples are only for helping the understanding of the present invention, and the scope of the present invention is not limited to these examples in any sense.

**[Example]**

**Synthesis Example 1. Preparation of first urethane-based prepolymer**

To a glass flask which was connected to a hose for connection to the vacuum pump and equipped with a stirrer, a condenser, and a thermometer, 43.6 parts by weight of the first polyol-1, 22.5 parts by weight of the first polyol-2, and 24.0 parts by weight of a phthalate-based plasticizer were added. Thereafter, the temperature was allowed to rise slowly to 140 °C, and the reaction was carried out under vacuum for 2 hours, then cooled to 60°C, and 9.9 parts by weight of an isocyanate compound was added. After confirming the exotherm, the content of unreacted NCO (NCO%) was measured every hour while maintaining at 85°C, and when the measured NCO% reached 1.70~1.75 wt.%, it was allowed to cool to 40°C to obtain a first urethane-based prepolymer.

The prepared first urethane prepolymer had a viscosity of 8,400 cps at 20°C, an NCO% of 1.72 wt.%, and a weight average molecular weight of 10,400 g/mol.

**Synthesis Example 2. Preparation of second urethane-based prepolymer**

To a glass flask which was connected to a hose for connection to the vacuum pump and equipped with a stirrer, a condenser and a thermometer, 18.75 parts by weight of the second polyol-1, 10.42 parts by weight of the second polyol-2, 20.83 parts by weight of the second polyol-3 and 31.25 parts by weight of a non-phthalate-based plasticizer were added. Thereafter, the temperature was allowed to rise slowly to 140 °C, and the reaction was carried out under vacuum for 2 hours, then cooled to 60°C, and 18.75 parts by weight of an isocyanate compound was added. After confirming the exotherm, the content of unreacted NCO (NCO%) was measured every hour while maintaining at 85°C, and when the measured NCO% reached 2.30~2.60 wt.%, it was allowed to cool to 40°C to obtain a second urethane-based prepolymer.

The prepared second urethane prepolymer had a viscosity of 12,000 cps at 20°C, an NCO% of 2.40 wt.%, and a weight average molecular weight of 20,200 g/mol.

**Synthesis Example 3. Preparation of second adhesion promoter**

To a glass flask which was connected to a hose for connection to the vacuum pump and equipped with a stirrer, a condenser and a thermometer, 10.5 parts by weight of the third polyol, 58.5 parts by weight of an isocyanate compound and 22.0 parts by weight of a phthalate-based plasticizer were added, and then stirred for 10 minutes. Thereafter, while keeping the temperature below 50°C paying attention to heat generation, 8.9 parts by weight of a phenyl amino silane compound was uniformly dripped over 60 minutes. After the above dripping, the content of unreacted NCO (NCO%) is measured every hour while maintaining 50°C or less, and when the measured NCO% reached 9.5 to 10.5 wt.%, it was allowed to cool to 40°C to obtain a second adhesion promoter (silane-modified urethane resin).

The prepared second adhesion promoter had a viscosity of 8,000 cps at 20°C, an NCO% of 10.0 wt.%, and a weight average molecular weight of 900 g/mol.

**Example 1. Preparation of urethane adhesive composition**

A vacuum pump made of stainless steel (SUS) is connected to a mixer which is capable of high-viscosity rotational stirring and wall scrubbing, has a jacket that can be heated, then 27.0 parts by weight of the first urethane-based prepolymer of Synthesis Example 1, 27.0parts by weight of the second urethane-based prepolymer of Synthesis Example 2 and 12.31 parts by weight of the non-phthalate-based plasticizer were added, and heated to 60 °C while stirring. Thereafter, 23.0 parts by weight of the first pigment, and 7.0 parts by weight of the second pigment were added at 60°C, stirred for 20 minutes, and then reduced pressure for 10 minutes with a vacuum of less than 20 Torr to remove moisture. The vacuum was allowed to stop, and then 0.09 parts by weight of organic amine compound, 0.001parts by weight of tin dilaurate-based compound, 0.004 parts by weight of tin mercaptide-based compound, 0.8parts by weight of the first adhesion promoter and 2.8 parts by weight of the second adhesion promoter of Synthesis Example 3 were added, and stirred for 30 minutes to obtain a urethane adhesive composition.

The prepared urethane adhesive composition had a viscosity of 22,000 cps at 40°C and an NCO% of 1.48 wt.%.

**Examples 2 to 9 and Comparative Examples 1 to 6**

Urethane adhesive compositions were prepared in the same manner as in Example 1, except that the content for each component described in Tables 1 and 2 was used.

[Table 1]

| Component (parts by weight) | Example 1 | Example 2 | Example 3 | Example 4 | Example 5 | Example 6 | Example 7 | Example 8 | Example 9 |
|---|---|---|---|---|---|---|---|---|---|
| First urethane-based prepolymer | 27.0 | 27.0 | 25.0 | 27.0 | 27.0 | 36 | 22 | 30 | 25.5 |
| Second urethane-based prepolymer | 27.0 | 27.0 | 29.0 | 27.0 | 27.0 | 18 | 32 | 28 | 25.5 |
| Non-phthalate-based plasticizer | 12.31 | 10.31 | 12.31 | 10.7 | 12.31 | 12.31 | 12.31 | 12.31 | 10.31 |
| First pigment | 23.0 | 22.0 | 23.0 | 23.0 | 30 | 23 | 23 | 23 | 22 |
| Second pigment | 7.0 | 10.0 | 7.0 | 7.0 | - | 7 | 7 | 7 | 10 |
| Organic amine compound | 0.09 | 0.09 | 0.09 | 0.09 | 0.09 | 0.09 | 0.09 | 0.09 | 0.09 |
| Tin dilaurate-based compound | 0.001 | 0.001 | 0.001 | 0.001 | 0.001 | 0.001 | 0.001 | 0.001 | 0.001 |
| Tin mercaptide-based compound | 0.004 | 0.004 | 0.004 | 0.004 | 0.004 | 0.004 | 0.004 | 0.004 | 0.004 |
| First adhesion promoter | 0.8 | 0.8 | 0.8 | 1.2 | 0.8 | 0.8 | 0.8 | 0.2 | 0.8 |
| Second adhesion promoter | 2.8 | 2.8 | 2.8 | 4.0 | 2.8 | 2.8 | 2.8 | 0.2 | 6.5 |

[Table 2]

| Component (parts by weight) | Comparative Example 1 | Comparative Example 2 | Comparative Example 3 | Comparative Example 4 | Comparative Example 5 | Comparative Example 6 |
|---|---|---|---|---|---|---|
| First urethane-based prepolymer | 54.0 | - | 27.0 | 27.0 | 38 | 20.5 |
| Second urethane-based prepolymer | - | 54.0 | 27.0 | 27.0 | 16 | 33.5 |

(continued)

| Component (parts by weight) | Compara tive Example 1 | Compara tive Example 2 | Compara tive Example 3 | Compara tive Example 4 | Compara tive Example 5 | Compara tive Example 6 |
|---|---|---|---|---|---|---|
| Non-phthalate-based plasticizer | 12.31 | 12.31 | 15.11 | 15.11 | 12.31 | 12.31 |
| First pigment | 23.0 | 23.0 | 23.0 | 23.0 | 23 | 23 |
| Second pigment | 7.0 | 7.0 | 7.0 | 7.0 | 7 | 7 |
| Organic amine compound | 0.09 | 0.09 | 0.09 | 0.09 | 0.09 | 0.09 |
| Tin dilaurate-based compound | 0.001 | 0.001 | 0.001 | 0.001 | 0.001 | 0.001 |
| Tin mercaptide-based compound | 0.004 | 0.004 | 0.004 | 0.004 | 0.004 | 0.004 |
| First adhesion promoter | 0.8 | 0.8 | - | 0.8 | 0.8 | 0.8 |
| Second adhesion promoter | 2.8 | 2.8 | 0.8 | - | 2.8 | 2.8 |

Table 3 below shows the manufacturers and brand names of each component used in Comparative Examples and Examples.

[Table 3]

| Component | Compound name | Note |
|---|---|---|
| first polyol-1 | polypropylene triol | Mw: 5,000g/mol |
| first polyol-2 | Polypropylene glycol | Mw: 2,000g/mol |
| isocyanate-based compound | 4,4-methylene diphenyl diisocyanate | - |
| phthalate-based plasticizer | diisononyl phthalate | - |
| second polyol-1 | polypropylene triol | Mw: 3,000g/mol |
| second polyol-2 | polypropylene triol | Mw: 1,000g/mol |
| second polyol-3 | polypropylene glycol | Mw: 1,000g/mol |
| non-phthalate-based plasticizer | bis(2-ethylhexyl) cyclohexane-1,4-dicarboxylate (DEHCH, CAS 84731-70-4) | - |
| first pigment | carbon black (manufacturer: cabot, brand name: ES7100) | DBP oil absorption: 119cm$^3$/100g |
| second pigment | calcined kaolin (CAS 92704-41-1) (manufacturer: SamYang Fine, brand name: SW 86) | - |

(continued)

| Component | Compound name | Note |
|---|---|---|
| organic amine compound (catalyst) | 2,2'-dimorpholinodiethyl ether | - |
| tin dilaurate (catalyst) | dioctyltin dilaurate (manufacturer: Nitto Kasei Co., Ltd., brand name: NEOSTANN U-810) | - |
| tin mercaptide-based compound (catalyst) | dibutyltin mercaptide (manufacturer: Evonik Industries, brand name: DABCO T120) | - |
| first adhesion promoter | 1,3,5-tris(6-hydroxyhexyl) Biuret triisocyanate(HDI Biuret) | Mw: 537g/mol, NCO%: 23.5wt. %, viscosity at 25°C: 1,800cps |
| the third polyol | polypropylene glycol | Mw: 400 g/mol |
| phenyl amino silane | N-phenyl-gamma-aminopropyltrimethoxy silane (manufacturer: Momentive, brand name: Silquest Y-9669) | - |

**Experimental Example: evaluation of physical properties**

For the urethane adhesive compositions of Examples 1 to 9 and Comparative Examples 1 to 6, physical properties were measured in the following manner, and the results are shown in Table 4 below.

1) Adhesive property (Knife Cut)

The composition was applied to the painted surface in dimensions of 120mm (length) X10mm (horizontal) X5mm (thickness), and cured at 20°C and 65% relative humidity for 7 days to form an adhesive layer. Thereafter, after cutting the adhesive layer on one end of the test piece with a 15 mm knife, the substrate of the painting was held by one hand and peeled off using a knife at an angle of 30°. Thereafter, the adhesive property was evaluated by calculating the residual area of the non-peeled adhesive layer as a percentage of the total area of the adhesive layer. In this case, the adhesive property was evaluated to be better as the residual area was higher.

2) Shear strength

The composition was applied and cured for 7 days under conditions of 20°C and 65% relative humidity to prepare a 5mm thick dogbone-shaped specimen, and then the shear strength was measured with a Universal Testing Machine(UTM).

3) Pot life

The composition was applied, and then left at intervals of 4 minutes, 5 minutes, and 6 minutes under conditions of 35°C and 90% relative humidity to prepare a specimen, and the time during which interfacial peeling with the adherend did not occur was measured.

4) Hardness

The composition was cured for 3 days under conditions of 20°C and 65% relative humidity to prepare a specimen with a thickness of 5 mm, and then the hardness was measured with a Shore A hardness meter.

5) Tensile strength

The composition was cured for 7 days under conditions of 20°C and 65% relative humidity to prepare a 5 mm thick dumbbell-type No. 3 specimen, and then tensile strength was measured with a Universal Testing Machine (UTM).

6) Modulus

The composition was cured for 7 days under conditions of 20°C and 65% relative humidity to prepare a specimen having a thickness of 5 mm, and then the shear modulus was measured with a Universal Testing Machine (UTM), and it was calculated by Equation 1 below.

[Equation 1]

$$\text{Modulus} = \frac{\text{load at break}\,(N) \times \text{specimen thickness}\,(cm)}{\text{amount of change}\,(cm) \times \text{specimen area}\,(m^2)}$$

[Table 4]

|  | Adhesive property (%) | Shear strength (MPa) | Tensile strength (MPa) | Hardness (Shore A) | Modulus (MPa) | Pot life |
|---|---|---|---|---|---|---|
| Example 1 | 100 | 5.3 | 10.2 | 68 | 2.30 | 5 minutes |
| Example 2 | 100 | 5.0 | 9.3 | 66 | 2.15 | 5 minutes |
| Example 3 | 100 | 5.0 | 9.2 | 70 | 2.50 | 5 minutes |
| Example 4 | 100 | 3.7 | 8.7 | 67 | 2.20 | 5 minutes |
| Example 5 | 100 | 5.25 | 8.9 | 62 | 2.25 | 5 minutes |
| Example 6 | 100 | 5.7 | 8.2 | 60 | 2.10 | 5 minutes |
| Example 7 | 100 | 4.3 | 9.2 | 65 | 2.30 | 5 minutes |
| Example 8 | 80 | 5.5 | 9.1 | 62 | 1. 90 | 3 minutes |
| Example 9 | 100 | 4.5 | 8.7 | 62 | 2.10 | 5 minutes |
| Comparative Example 1 | 100 | 6.0 | 6.8 | 55 | 1.87 | 5 minutes |
| Comparative Example 2 | 100 | 3.0 | 6.0 | 75 | 2.50 | 5 minutes |
| Comparative Example 3 | 90 | 4.8 | 9.3 | 65 | 2.10 | 1 minute |
| Comparative Example 4 | 100 | 6.75 | 7.8 | 65 | 1.35 | 1 minute |
| Comparative Example 5 | 100 | 5.2 | 9.3 | 65 | 1.7 | 5 minutes |
| Comparative Example 6 | 100 | 3.0 | 9.2 | 63 | 1.9 | 5 minutes |

As shown in Table 4, the urethane adhesive compositions of Examples 1 to 9 had excellent tensile strength, hardness and modulus, and adequate pot life.

On the other hand, Comparative Example 1, which did not contain the second urethane-based prepolymer, lacked tensile strength and hardness, and Comparative Example 2, which did not contain the first urethane-based prepolymer, lacked shear strength and tensile strength. In addition, Comparative Example 3, which did not contain the first adhesion promoter, and Comparative Example 4, which did not contain the second adhesion promoter, lacked workability due to a short pot life. In addition, Comparative Example 4, which did not contain the second adhesion promoter, also lacked modulus and tensile strength. Also, Comparative Example 5 containing a small amount of the second urethane-based prepolymer lacked modulus, and Comparative Example 6 containing an excess of the second urethane-based prepolymer lacked shear strength.

## Claims

1. A urethane adhesive composition comprising a first urethane-based prepolymer, a second urethane-based prepolymer, a first adhesion promoter and a second adhesion promoter,

   wherein the first urethane-based prepolymer is prepared from a first resin composition containing a first polyol, an isocyanate compound and a phthalate-based plasticizer,
   the second urethane-based prepolymer is prepared from a second resin composition containing a second polyol, an isocyanate compound and a non-phthalate-based plasticizer,
   the first adhesion promoter is a polyisocyanate,
   the second adhesion promoter is a silane modified resin, and
   the composition comprises 50 to 150 parts by weight of the second urethane-based prepolymer, based on 100 parts by weight of the first urethane-based prepolymer.

2. The urethane adhesive composition according to claim 1, wherein the first urethane-based prepolymer has the content of unreacted NCO of 1.6 to 1.85 wt.%, relative to the total weight of the prepolymer, and the second urethane-based prepolymer has the content of unreacted NCO of 2.2 to 2.7 wt.%, relative to the total weight of the prepolymer.

3. The urethane adhesive composition according to claim 1, wherein the first urethane-based prepolymer has a weight average molecular weight of 3,000 to 15,000 g/mol, and the second urethane-based prepolymer has a weight average molecular weight of 17,000 to 35,000 g/mol.

4. The urethane adhesive composition according to claim 1, wherein the composition comprises the first adhesion promoter in an amount of 0.001 to 5 parts by weight, and the second adhesion promoter in an amount of 1 to 20 parts by weight, based on 100 parts by weight of the first urethane-based prepolymer.

5. The urethane adhesive composition according to claim 1, wherein the second adhesion promoter has the content of unreacted NCO of 9.0 to 11 wt.%, relative to the total weight.

6. The urethane adhesive composition according to claim 1, wherein the composition further comprises at least one selected from the group consisting of a pigment, a plasticizer and a catalyst.

## INTERNATIONAL SEARCH REPORT

| International application No. |
| --- |
| **PCT/KR2020/008708** |

**A.    CLASSIFICATION OF SUBJECT MATTER**

**C09J 175/04**(2006.01)i; **C09J 11/00**(2006.01)i; **C08G 18/10**(2006.01)i; **C08K 5/12**(2006.01)i; **C08K 5/00**(2006.01)i

According to International Patent Classification (IPC) or to both national classification and IPC

**B.    FIELDS SEARCHED**

Minimum documentation searched (classification system followed by classification symbols)

C09J 175/04; C08G 18/10; C08G 18/12; C08G 18/38; C08G 18/48; C09J 109/00; C09J 11/00; C08K 5/12; C08K 5/00

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 우레탄(urethane), 습기경화형 접착제(moisture curable adhesive), 프리폴리머 (prepolymer), 가소제(plasticizer), 실란 변성 수지(modified silane resin), 폴리이소시아네이트(polyisocyanate)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2019-518098 A (DOW GLOBAL TECHNOLOGIES LLC) 27 June 2019. See paragraphs [0004]-[0032]; and claims 1 and 6. | 1-6 |
| A | JP 2014-077094 A (YOKOHAMA RUBBER CO., LTD.) 01 May 2014. See entire document. | 1-6 |
| A | JP 2000-226424 A (OSHIKA SHINKO CO., LTD.) 15 August 2000. See entire document. | 1-6 |
| A | KR 10-2007-0084018 A (DOW GLOBAL TECHNOLOGIES INC.) 24 August 2007. See entire document. | 1-6 |
| A | JP 2016-508169 A (DOW GLOBAL TECHNOLOGIES LLC) 17 March 2016. See entire document. | 1-6 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 October 2020** | **16 October 2020** |

| Name and mailing address of the ISA/KR | Authorized officer |
| --- | --- |
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
| --- |
| **PCT/KR2020/008708** |

| Patent document cited in search report | | | Publication date (day/month/year) | Patent family member(s) | | | Publication date (day/month/year) |
| --- | --- | --- | --- | --- | --- | --- | --- |
| JP | 2019-518098 | A | 27 June 2019 | BR | 112018071889 | A2 | 05 February 2019 |
| | | | | CN | 109071755 | A | 21 December 2018 |
| | | | | EP | 3448903 | A1 | 06 March 2019 |
| | | | | KR | 10-2019-0003569 | A | 09 January 2019 |
| | | | | WO | 2017-189057 | A1 | 02 November 2017 |
| JP | 2014-077094 | A | 01 May 2014 | JP | 6171302 | B2 | 02 August 2017 |
| JP | 2000-226424 | A | 15 August 2000 | None | | | |
| KR | 10-2007-0084018 | A | 24 August 2007 | AT | 473248 | T | 15 July 2010 |
| | | | | BR | PI0516332 | A | 02 September 2008 |
| | | | | BR | PI0516332 | B1 | 14 November 2017 |
| | | | | CA | 2580157 | A1 | 18 May 2006 |
| | | | | CA | 2580157 | C | 29 April 2014 |
| | | | | CN | 101052664 | A | 10 October 2007 |
| | | | | CN | 101052664 | B | 11 August 2010 |
| | | | | EP | 1812490 | A1 | 01 August 2007 |
| | | | | EP | 1812490 | B1 | 07 July 2010 |
| | | | | JP | 2008-519141 | A | 05 June 2008 |
| | | | | JP | 2013-139575 | A | 18 July 2013 |
| | | | | JP | 5394641 | B2 | 22 January 2014 |
| | | | | KR | 10-1226337 | B1 | 24 January 2013 |
| | | | | MX | 2007005549 | A | 21 May 2007 |
| | | | | RU | 2007121454 | A | 20 December 2008 |
| | | | | US | 2006-0096694 | A1 | 11 May 2006 |
| | | | | US | 2007-0240808 | A1 | 18 October 2007 |
| | | | | US | 2008-0041521 | A1 | 21 February 2008 |
| | | | | US | 2008-0099142 | A1 | 01 May 2008 |
| | | | | US | 7361292 | B2 | 22 April 2008 |
| | | | | US | 7534375 | B2 | 19 May 2009 |
| | | | | US | 7615167 | B2 | 10 November 2009 |
| | | | | US | 7771622 | B2 | 10 August 2010 |
| | | | | WO | 2006-052505 | A1 | 18 May 2006 |
| JP | 2016-508169 | A | 17 March 2016 | CN | 104968698 | A | 07 October 2015 |
| | | | | CN | 104968698 | B | 13 March 2018 |
| | | | | EP | 2935384 | A1 | 28 October 2015 |
| | | | | JP | 6178865 | B2 | 09 August 2017 |
| | | | | KR | 10-1735226 | B1 | 24 May 2017 |
| | | | | KR | 10-2015-0073202 | A | 30 June 2015 |
| | | | | US | 2015-0232723 | A1 | 20 August 2015 |
| | | | | US | 2016-0333237 | A1 | 17 November 2016 |
| | | | | US | 9428678 | B2 | 30 August 2016 |
| | | | | US | 9822290 | B2 | 21 November 2017 |
| | | | | WO | 2014-098935 | A1 | 26 June 2014 |

Form PCT/ISA/210 (patent family annex) (July 2019)

**EP 4 006 118 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190003569